# EUROPEAN PATENT APPLICATION

(11) **EP 1 686 017 A1**
(43) Date of publication of application: **02.08.2006**
(21) Application number: 06000122.9
(22) Date of filing: 04.01.2006
(51) Int. Cl.: B60R 21/16

(54) **Airbag and airbag apparatus**

(30) Priority: 26.01.2005 JP 2005018538
(71) Applicant: TAKATA CORPORATION, Minato-ku, Tokyo 106-8510 (JP)
(72) Inventor: Abe, Kazuhiro, Minato-ku, Tokyo 106-8510 (JP)
(74) Representative: Vossius & Partner

(57) **Abstract**

To provide an airbag and an airbag apparatus capable of preventing a head region of an occupant from colliding with a pillar, in the event of an oblique crash of a motor vehicle without excessively increasing the volume of an airbag. An airbag 10 of an airbag apparatus for use in a driver-side seat includes an airbag main body 12 expanded in a manner such that the same covers a steering wheel 2 in front of an occupant seated on a driver-side seat, and an upper extending portion 14 that covers an A pillar 1 by extending upward from above a left side of the airbag main body 12. The airbag apparatus is designed not to change a posture thereof even when the steering wheel 2 is rotated (Fig.1).

## Description

The present invention relates to an airbag and an airbag apparatus attached to a motor vehicle or the like, and more specifically relates to an airbag and an airbag apparatus configured to prevent a head region of an occupant from colliding with a pillar of the motor vehicle.

An airbag for protecting an occupant seated on a driver's seat, a passenger seat, or a rear seat of a motor vehicle, in the event of a crash of the motor vehicle, is known. When volume of the airbag is increased, most of a head region and an upper half of a body of the occupant can be caught by the airbag, however, a large gas-generation volume is required for an inflator.

A passenger airbag that prevents the head region of the occupant from colliding with a pillar of the motor vehicle and that is tried to improve to have little volume is described in United States Patent No. 4,474,390. Fig. 6 illustrates the airbag described in United States Patent No. 4,474,390, in which an airbag apparatus is attached to an instrument panel 2 of the motor vehicle 1, and the airbag 3 is extended between the instrument panel 2 and the passenger seat in a vertical direction.

A front face of the airbag 3 faces an occupant seated on the passenger seat and serves as a colliding-face for the occupant that catches the occupant seated on the passenger seat in the event of a crash of the motor vehicle. At a rear face of the airbag 3, a gas in-flow inlet 4 is provided.

The airbag 3 has an inverted trapezoid shape in which the lower the position moves from an upper part to a lower part, the smaller a width of the airbag (the width of the airbag in a left-and-right direction of the vehicle body of the motor vehicle 1) becomes. Therefore, the volume of a lower portion of the airbag is small. A side 6 of the upper portion of the airbag 3 prevents the occupant seated on the passenger seat from directly colliding with a front pillar 7, in the event of an oblique crash of the motor vehicle 1.

An upper portion of the airbag described in US-A-4,474,390 (Patent Document 1) laterally overhangs. Therefore, in the event of an oblique crash of the motor vehicle, and when an occupant moves in a manner stretching upward in an obliquely forward direction, there is a possibility that a head region of the occupant collides with a pillar, overleaping the lateral overhanging portion of the airbag. In the airbag having increased lengths in an upper-and-lower direction and a left-and-right direction for preventing the above problem, the volume of the airbag becomes excessive.

Accordingly, it is an object of the present invention to provide an airbag and an airbag apparatus capable of preventing the head region of the occupant from colliding with the pillar in the event of an oblique crash of the motor vehicle, without increasing the volume of the airbag.

The airbag recited in Claim 1 with respect to the present invention is characterized in that the airbag of the airbag apparatus provided in front of a seat of a motor vehicle includes an airbag main body configured to be expanded in front of an occupant and an upper extending portion configured to extend upward from above a left or a right of the airbag main body.

The airbag recited in Claim 2 is characterized in that, in the airbag according to Claim 1, an extending length L of the upper extending portion from the airbag main body, when expanded, in a direction parallel to an axial direction of a steering column is determined to be from 50 to 400 mm.

The airbag recited in Claim 3 is characterized in that the airbag according to any one of Claims 1 or 2 includes a device for limiting a thickness of the upper extending portion, when the upper extending portion is expanded.

The airbag recited in Claim 4 is characterized in that, in the airbag according to any one of Claims 1 through 3, the airbag is for use in a front seat, and the upper extending portion is configured to be slanting toward a backside of the motor vehicle, when the airbag is expanded.

The airbag recited in Claim 5 is characterized in that, in the airbag according to Claim 4, the upper extending portion is configured to be slanting toward the backside of the motor vehicle, when the airbag is expanded, by connecting the upper extending portion on the occupant side to the airbag main body on the occupant side with a tether belt.

The airbag apparatus recited in Claim 6 is characterized in including an airbag and an inflator for expanding the airbag, in which the airbag is the same airbag according to any one of Claims 1 through 5.

The airbag apparatus recited in Claim 7 is characterized in that, in the airbag apparatus according to Claim 6, the airbag apparatus is the airbag apparatus for use in a driver-side seat and is configured not to change a posture thereof, even when a steering wheel is rotated.

In the airbag of the airbag apparatus according to Claims 1 and 6 with respect to the present invention, the upper extending portion is extended upward from above a left or a right of the airbag main body. Because the upper extending portion, when the airbag is expanded, is extended upward along the pillar and covers the pillar, a head region of the occupant is prevented from colliding with the pillar, even when the occupant moves upward in an obliquely forward direction.

Particularly, as recited in Claim 2, by determining an extending length L of the upper extending portion from the airbag main body, when expanded, in the direction parallel to the axial direction of the steering column to be from 50 to 400 mm, the head region of the occupant is sufficiently prevented from colliding with the pillar.

As recited in Claim 3, when the thickness of the upper extending portion, when expanded, is limited, volume of the airbag can be reduced to that extent. In addition, the upper extending portion is brought to have a flat shape or nearly the same shape facing the occupant and the upper extending portion is able to be widely expanded. Accordingly, the pillar is brought to be covered by the upper extending portion.

Further, the A pillar of a motor vehicle is usually slanting toward backside thereof. Therefore, in the airbag for use in a front-side seat, the upper extending portion is preferable to be configured, when expanded, in a manner to be slanting toward backside of the motor vehicle, as recited in Claim 4.

As recited in claim 5, by connecting the upper extending portion on the occupant side to the airbag main body on the occupant side with the tether belt, the upper extending portion can be expanded in a manner to be slanting toward backside.

As recited in Claim 7, when the airbag apparatus is applied to the airbag apparatus for use in a driver-side seat, the airbag apparatus is configured not to change a posture thereof, even when a steering wheel is rotated. As a result, even when the motor vehicle is crashed while moving through a curve, the upper extending portion is reliably expanded along the A pillar.

### [Best Mode for Carrying Out the Invention]

The embodiment of the present invention will be described below referring to the drawings.

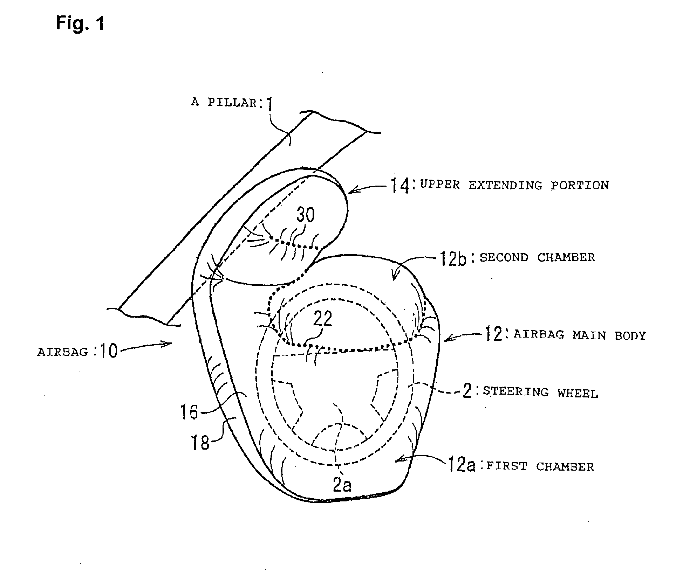

FIG. 1 is a perspective view illustrating an expanded state of the airbag with respect the embodiment;
FIG. 2(a) is a vertical cross-section illustrating a state when a first chamber of the airbag is expanded;
FIG. 2(b) is a vertical cross-section illustrating a state when a second chamber of the airbag is expanded;
FIG. 3 is a plan view illustrating the airbag;
FIG. 4 is a side view illustrating an interior of a motor vehicle when the airbag is expanded;
FIG. 5 is a perspective view illustrating a state, when an upper extending portion catches a head region of an occupant; and

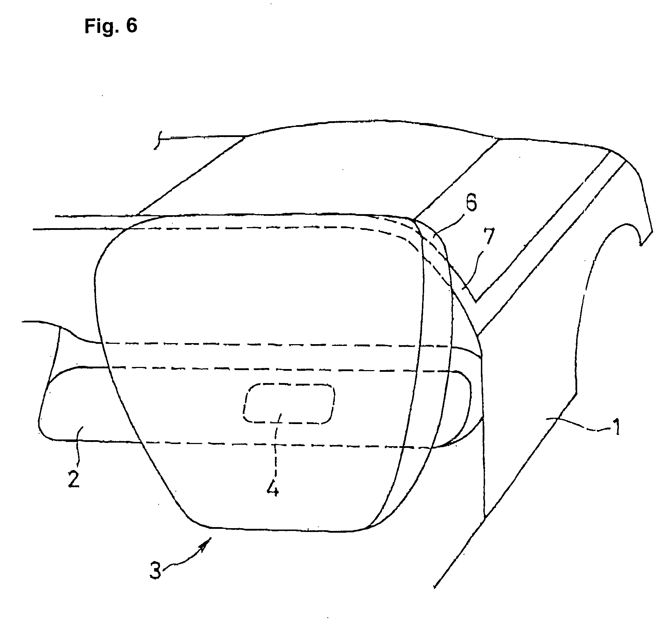

FIG. 6 is an explanatory view explaining an example of a conventional airbag.

In this embodiment, an airbag 10 is the driver-side airbag mounted on a driver-side airbag apparatus of the motor vehicle. The driver-side airbag apparatus is provided with the airbag 10, a retainer (not shown), to which the airbag 10 is attached, a gas-generator (not shown) for expanding the airbag 10, and a module cover (not shown) for covering the folded airbag 10. The driver-side airbag apparatus is disposed at an occupant side of a central portion 2a of a steering wheel 2.

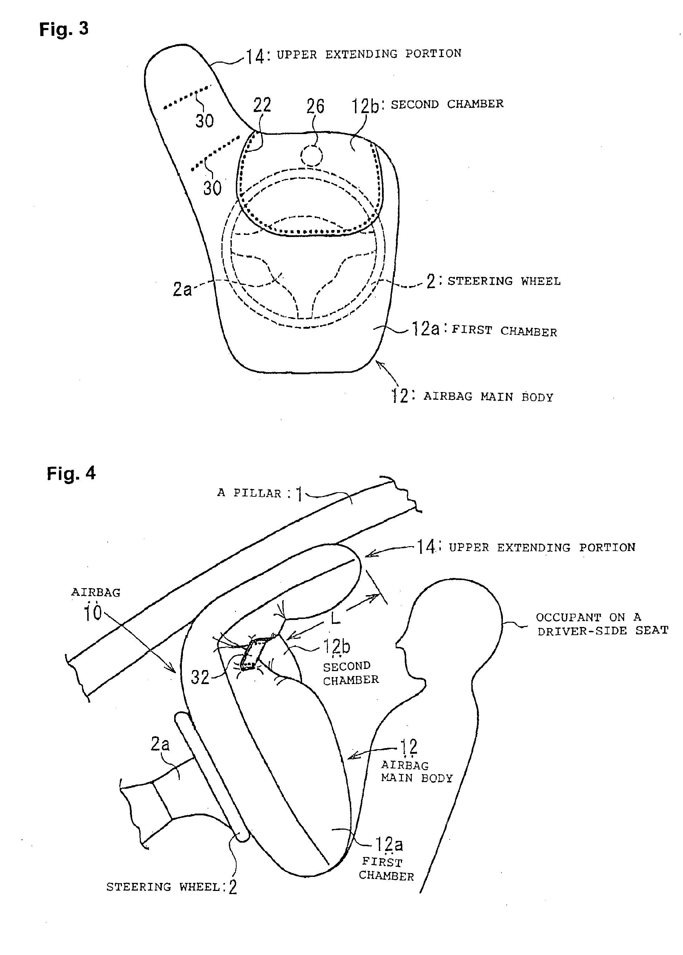

Further, in this embodiment, a driver's seat is located in the left side of the front row in the motor vehicle and an A pillar 1 is disposed in front of the driver's seat on the oblique left. The A pillar 1 is slanting toward a backside of the motor vehicle, as shown in FIG. 4.

The airbag 10 is provided with an airbag main body 12 that is expanded in a manner to cover the steering wheel 2 in front of the occupant seated on the driver's seat and an upper extending portion 14 that covers the A pillar 1 by upwardly extending from the upper part of the left side of the airbag main body 12. An extending length L of the upper extending portion 14 from the airbag main body 12, when expanded, in a direction parallel to an axial direction of a steering column is preferable to be determined to be from 50 to 400 mm, particularly from 150 to 400 mm, and more particularly from 200 to 400 mm.

As shown in FIG. 3, the airbag main body 12 is expanded such that a side peripheral portion thereof overhangs an outer periphery of the steering wheel 2 (in a radial direction). Further, in this embodiment, the amount of hangover of the airbag main body 12 from both a left and a right side part of the outer periphery of the steering wheel 2 in the expanded state of the airbag main body 12 is suppressed rather than the amount of overhang from an upper end portion and a lower end portion of the outer periphery of the steering wheel 2.

In this embodiment, the airbag 10 is formed by stitching a front main panel 16 composed of a series of a surface of the airbag main body 12 on an occupant side and a surface of the upper extending portion 14 on an occupant side, a rear panel 18 composed of a series of a surface of the airbag main body 12 on a steering wheel side and a surface of the upper extending portion 14 on a steering wheel side, and an upper panel 20 disposed at an upper part of the airbag main body 12 on an occupant side together.

The front main panel 16 and the rear panel 18 are the panels having substantially the same shape and each of respective peripheral edge portions are combined together by a seam (not shown) formed with a thread or the like. The upper panel 20 is overlapped with the front main panel 16 on an occupant side at an upper part of the airbag main body 12, and a peripheral edge portion of the upper panel 20 is combined with the front main panel 16 by a seam 22.

An internal part of the airbag main body 12 is partitioned into a first chamber 12a and a second chamber 12b by the front main panel 16, the rear panel 18, and the upper panel 20. The first chamber 12a is a chamber surrounded by the front main panel 16 and the rear panel 18 and the second chamber 12b is a chamber surrounded by the front main panel 16 and the upper panel 20.

In the vicinity of a center of the airbag main body 12 on a steering wheel 2 side , a gas inlet (not shown) for receiving gas from the gas generator is provided. The gas inlet communicates with internal space of the first chamber 12a.

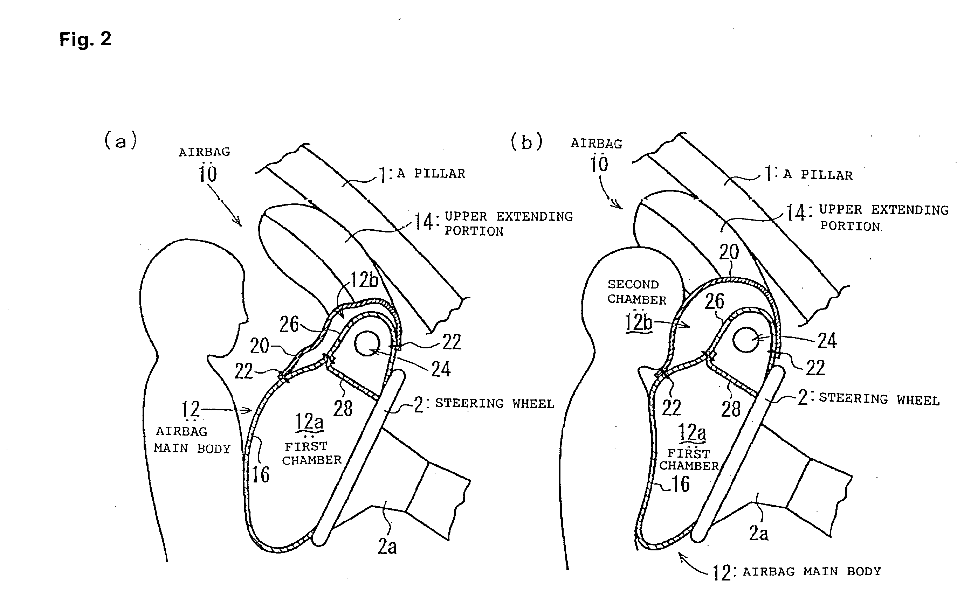

At both a left and a right sides of the second chamber 12b, a communication opening 24 that allows the first chamber 12a to communicate with the second chamber 12b (refer to FIGs. 2(a) and 2(b)) is formed. Further, in the vicinity of a center of the second chamber 12b in a left-and-right direction, a vent hole 26 for allowing the gas in the second chamber 12b to be discharged into the first chamber 12a, when the expanded second chamber 12b catches the occupant, is formed. In addition, although not shown, a vent hole for allowing the gas in the first chamber 12a to be discharged is formed in the airbag main body 12.

Further, in this embodiment, the front main panel 16 and the rear panel 18 are combined together by a tether belt 28 at the upper part of the airbag main body 12. Thereby, a thickness of an upper part of the first chamber 12a, when expanded, is limited.

Furthermore, in this embodiment, in the upper extending portion 14, the front main panel 16 and the rear panel 18 are also combined by a tether belt (not shown). In this embodiment, the tether belt is provided at two positions along an extending direction of the upper extending portion 14. A numeral 30 in FIG. 3 denotes a seam that stitches an end of the tether belt in the upper extending portion 14 on the front main panel 16. By the tether belt, the upper extending portion 14 is made to have a flat shape widened in a left-and-right direction, when expanded.

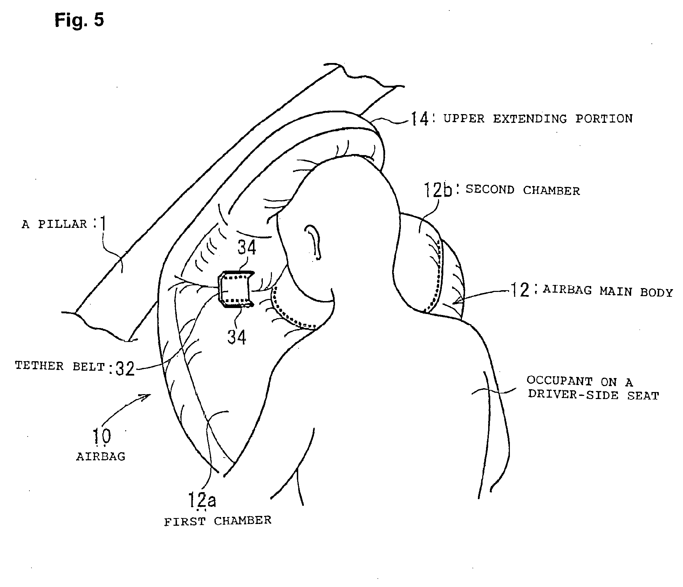

In this embodiment, the upper extending portion 14 on the occupant side , when expanded, is connected to the airbag main body 12 on the occupant side by a tether belt 32 in a manner such that the upper extending portion 14 is slanting toward the backside of the motor vehicle. A numeral 34 (in FIG. 5) denotes a seam that combines each of both ends of the tether belt 32 with the front main panel 16.

In the airbag 10, a peripheral edge portion of the gas inlet is connected to the retainer. In addition, the gas generator is attached to the retainer to allow the gas to be supplied into the airbag 10 through the gas inlet. Further, the airbag 10 is folded and the modul cover is attached in a manner to cover the airbag 10, and thus the airbag apparatus is configured.

In this embodiment, an attaching base (not shown) whose posture is not changed, even when the steering wheel 2 is rotated, is provided in the central portion 2a of the steering wheel 2. A configuration of the attaching base is not particularly limited. For example, the attaching base may be configured in a manner not to connect to the steering wheel 2 and to connect to a non-rotating member, such as steering column housing or the like, through a connecting member, or other configuration may be applicable.

The airbag apparatus is attached to the attaching base and is configured not to change the posture, even when the steering wheel 2 is rotated.

When a motor vehicle, on which the thus configured airbag apparatus for use in a driver-side seat is mounted, is crashed, the gas generator activates, and the gas is blown out and supplied into the airbag 10. The airbag 10 starts to be expanded by the gas, and pushing open the modul cover, the airbag 10 is expanded in front of the occupant seated on the driver-side seat.

In this embodiment, because the gas blown-out from the gas generator is led into the first chamber 12a, the airbag 10 is largely expanded from a central portion of the airbag main body 12 to a lower part thereof first, as shown in FIG. 2(a). In addition, because an internal volume of the first chamber 12a is small in comparison with an entire volume of the airbag 10 and an expansion of the upper part of the first chamber 12a toward the occupant side is limited by the tether belt 28, the airbag main body 12 is immediately expanded from the central part to the lower part thereof. Therefore, a chest region or an abdominal region of the occupant seated on the driver-side seat is caught by the airbag 10 (airbag main body 12) earlier.

The gas led into the first chamber 12a reaches an upper left part of the airbag main body 12 and flows into the upper extending portion 14 and flows into the second chamber 12b passing through each of the communication openings 24. As a result, each of the upper part of the airbag main body 12 and the upper extending portion 14 is also expanded. The upper extending portion 14 starts to be protrudingly expanded upward along the A pillar 1 from an upper left part of the airbag main body 12 and covers the A pillar 1.

Further, in this embodiment, because a thickness of the upper extending portion 14 is limited by the tether belt, the upper extending portion 14 is also immediately expanded. Furthermore, at this moment, because the upper extending portion 14 is expanded in a manner such that the same is slanting toward the backside of the motor vehicle by being pulled by the tether belt 32, the upper extending portion 14 is brought to smoothly cover the A pillar 1.

When the head region of the occupant moves straight toward approximately front side, the head region is caught by an upper part of the expanded airbag main body 12 (the second chamber 12b) and thereby, the head region of the occupant is prevented from colliding with a member existing in front of the seat, such as the steering wheel 2 or the like.

Further, even when the head region of the occupant moves upward in an obliquely left frontward direction, because the expanded upper extending portion 14 covers the A pillar 1, the head region of the occupant is caught by the upper extending portion 14 and the head region of the occupant is prevented from colliding with the A pillar 1.

Furthermore, in this embodiment, by designing the extending length L of the upper extending portion 14 from the airbag main body, when expanded, in the direction parallel to the axial direction of the steering column to be equal to or greater than 50 mm, the head region of the occupant is sufficiently prevented from colliding with the A pillar 1. In addition, because the extending length L of the upper extending portion 14 from the airbag main body is designed to be 400 mm or less, an interference of the upper extending portion 14 with a roof part of the motor vehicle can be suppressed.

Furthermore, in this embodiment, because the thickness of the upper extending portion 14, when expanded, is limited by the tether belt, part of the upper extending portion 14 facing the occupant is brought to have a flat shape or nearly the same shape. As a result, the upper extending portion 14 is widely expanded and the A pillar 1 is brought to be widely covered with the upper extending portion 14.

In this embodiment, because the airbag apparatus is configured not to change the posture thereof even when the steering wheel 2 is rotated, even when the motor vehicle is crashed, while moving through a curve, the upper extending portion 14 is reliably expanded along the A pillar 1.

The above-described embodiment is illustrative of the invention and is not to be construed as limiting the invention.

For example, in the above-described embodiment, because the pillar is disposed at a left side in front of the seat, the upper extending portion is provided at an upper left part of the airbag main body. However, when a pillar is disposed at a right side in front of the seat, the upper extending portion is provided at an upper right part of the airbag main body.

In this embodiment, an example of applying the present invention to the airbag apparatus for use in the driver-side seat is described. However, the present invention can be also applied to the airbag apparatus for use in a passenger seat or the seat at a row behind the driver-side seat and the passenger seat.

## Claims

1. An airbag mounted on an airbag apparatus provided in front of a seat of a motor vehicle comprising:
an airbag main body configured to be expanded in front of an occupant; and
an upper extending portion configured to extend upward from above a left or a right of the airbag main body.

2. The airbag according to Claim 1, wherein an extending length L of the upper extending portion from the airbag main body, when expanded, in a direction parallel to an axial direction of a steering column is from 50 to 400 mm.

3. The airbag according to any one of Claims 1 or 2 comprising:
a device for limiting a thickness of the upper extending portion when the upper extending portion is expanded.

4. The airbag according to any one of Claims 1 through 3, wherein the airbag is for use in a front seat, and the upper extending portion is configured to be slanting toward a backside of the motor vehicle, when the airbag is expanded.

5. The airbag according to Claim 4, wherein the upper extending portion is configured to be slanting toward the backside of the motor vehicle, when the airbag is expanded, by connecting the upper extending portion on an occupant side to the airbag main body on an occupant side with a tether belt.

6. An airbag apparatus comprising:
an airbag; and
an inflator for expanding the airbag, wherein
the airbag is the same airbag according to any one of Claims 1 through 5.

7. The airbag apparatus according to Claim 6, wherein the airbag apparatus is that for use in a driver-side seat and is configured not to change a posture thereof, even when a steering wheel is rotated.
